# EUROPÄISCHE PATENTANMELDUNG

(11) **EP 0 838 630 A2**
(43) Veröffentlichungstag der Anmeldung: **29.04.1998**
(21) Anmeldenummer: 97116458.7
(22) Anmeldetag: 22.09.1997
(51) Int. Cl.: F21Q 1/00, B60Q 1/00

(54) **Fahrzeugrückleuchte mit Blendrahmen**

(30) Priorität: 24.10.1996 DE 29618563 U
(71) Anmelder: Knaus Caravan GmbH, 94118 Jandelsbrunn (DE)
(72) Erfinder: Lang, Manfred, D-50674 Köln (DE)
(74) Vertreter: Matschkur, Lindner Blaumeier Patent- und Rechtsanwälte

(57) **Zusammenfassung**

Fahrzeugrückleuchte mit einem mehrere Signalleuchten aufweisenden Leuchtenkörper, der an einem Leuchtenträger befestigt ist und dessen Außenkontur von einem Blendrahmen umfaßt ist, der mit dem Leuchtenträger verbindbar ist.

## Beschreibung

Während früher Rückleuchten an Fahrzeugen in ihrer Formgebung ausschließlich nach den Zulassungsvorschriften und nach Zweckmäßigkeitsgesichtspunkten gestaltet wurden, wie dies beispielsweise in DE-U-80 26 763 beschrieben ist, werden im Fahrzeugbau heute insbesondere die Rückleuchten in starkem Maße in die Gestaltung der Fahrzeugkarosserie mit einbezogen, so daß hier auch sehr eigenwillige Formgebungen für die Rückleuchten gefordert sind. Dies hat zur Folge, daß in ihrer Formgebung teilweise komplizierte Leuchtenkörper entstehen, für deren Herstellung komplizierte und teure Werkzeuge notwendig sind.

Der Erfindung liegt die Aufgabe zugrunde, eine Fahrzeugrückleuchte zu schaffen, die es ermöglicht, eine vorhandene Rückleuchtengrundform in ihrem gestalterischen Erscheinungsbild zu variieren.

Diese Aufgabe wird erfindungsgemäß gelöst durch eine Fahrzeugrückleuchte mit einem mehrere Signalleuchten aufweisenden Leuchtenkörper, der auf einem Leuchtenträger befestigt ist und dessen Außenkontur von einem Blendrahmen umfaßt ist, der mit dem Leuchtenträger verbindbar ist. Mit diesem Blendrahmen ist die Möglichkeit gegeben, eine Rückleuchte an einem Zugfahrzeug ebenso wie eine Rückleuchte an einem Anhänger, die in ihrer gesamten Außenkontur zunächst im wesentlichen durch die vorgeschriebene Größe und Form des Dreieck-Rückstrahlers bestimmt wird, in ihrer gesamten Optik noch zu verändern Der Blendrahmen schließt mit seiner Innenkontur unmittelbar an die vorgegebene Außenkontur der vorgegebenen Rückleuchte an. Die Außenkontur des Blendrahmens kann wiederum beliebig gestaltet werden, so daß hier optisch eine eigenwillige und ggf. anderen Symmetriebedingungen gehorchende Außenkontur geschaffen werden kann, die vorhandene Rückleuchte jedoch weiterhin verwendbar ist. Die Rückleuchte am Zugfahrzeug kann dann in ihrer gestalterischen Optik an die Anhänger-Rückleuchte angepaßt werden. Dies setzt jedoch voraus, daß sowohl ein 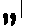 linker" als auch ein 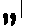 rechter" Blendrahmen geschaffen wird, der dann an die entsprechende Rückleuchte angesetzt wird.

Je nach Gestaltung und Bauaufwand für die Herstellformen kann der Blendrahmen einteilig oder auch aus mehreren Teilstücken zusammensetzbar gestaltet sein.

In vorteilhafter Ausgestaltung der Erfindung ist ferner vorgesehen, daß zur Befestigung des Blendrahmens ein mit dem Leuchtenträger verbindbarer, rahmenförmiger Zusatzträger vorgesehen ist. Der Leuchtenträger muß sowohl für ein Zugfahrzeug als auch für einen Anhänger jeweils in einer 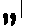 linken" und einer 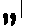 rechten" Ausführungsform hergestellt werden und dient im wesentlichen dazu, nicht nur die Lichttechnik aufzunehmen, sondern auch die als Grundelement dienende Rückleuchte zu einer geschlossenen Baueinheit miteinander zu verbinden. An diesen Leuchtenträger kann dann entsprechend ein rahmenförmiger Zusatzträger angeschlossen werden, mit dem der Blendrahmen verbunden ist, so daß auch eine derartige, mit einem Blendrahmen besonders gestaltete Rückleuchte wiederum als feste Baueinheit zur Verfügung steht und am Fahrzeug dann montiert werden kann.

Die Erfindung wird anhand schematischer Zeichnungen von Ausführungsbeispielen näher erläutert. Es zeigen:
- Fig. 1: eine Anhängerrückleuchte,
- Fig. 2: eine Zugfahrzeugrückleuchte,
- Fig. 3: einen Schnitt gemäß der Linie III-III in Fig. 1.

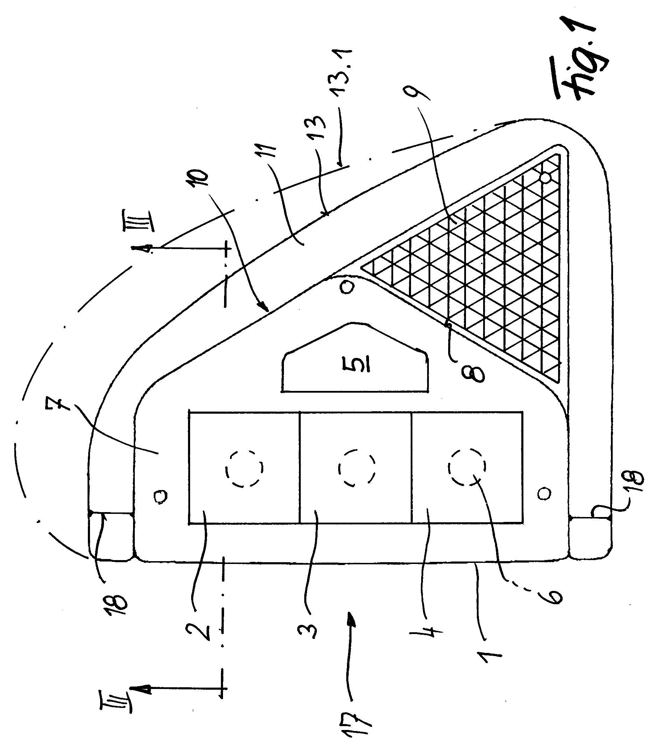

In Fig. 1 ist in einer Aufsicht ein Leuchtenkörper 1 einer Anhängerrückleuchte dargestellt, der mehrere nur angedeutete Signalleuchten 2, 3, 4 und 5 umfaßt, denen jeweils wenigstens eine Lampe 6 zugeordnet ist. Die Anordnung ist hierbei so getroffen, daß der Leuchtenkörper zusammen mit einem hier nicht näher dargestellten Leuchtenträger eine einstückige Baueinheit bildet, wobei die einzelnen Signalleuchten-Bereiche 2, 3, 4 und 5 je nach den vorgegebenen Signalfunktionen unterschiedlich gefärbt und mit einer entsprechenden Leuchtenoptik versehen sein können. In der Regel werden die Signalleuchten-Bereiche 2, 3 und 4 von einem rot durchscheinenden Werkstoff gebildet, während der Signalleuchten-Bereich 5 durch einen weißen oder gelben durchsichtigen Werkstoff gebildet wird. Die jeweils an die Bereiche 2, 3, 4 und 5 angrenzenden Bereiche 7 sind dann in der gleichen Farbe und in der Regel auch im gleichen Material wie die Signalleuchten-Bereiche 2, 3 und 4 gehalten, so daß sich ein im wesentlichen 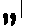 rot" gehaltener Leuchtenkörper ergibt. Der Leuchtenkörper 1 ist bei dem hier angegebenen Ausführungsbeispiel so gestaltet, daß aufgrund der gegebenen Symmetriebedingungen der Leuchtenkörper sowohl als 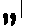 linke" wie auch als 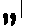 rechte" Rückleuchte eingesetzt werden kann.

An die Außenkante 8 des Leuchtenkörpers 1 ist ein Dreieck-Rückstrahler angesetzt, der ebenso wie der Leuchtenkörper 1 mit dem hier nicht näher dargestellten Leuchtenträger fest verbunden ist.

Gerade im Hinblick auf die durch den Dreieck-Rückstrahler 9 aufgrund der gesetzlichen Vorschriften zwangsweise vorgegebene starre Dreieck- oder Trapezkontur der gesamten Rückleuchte sind hier an sich kaum Möglickeiten für eine besondere Gestaltung der Rückleuchte gegeben.

Da die lichttechnisch an sich nicht benötigten Randbereiche 7 aus dem gleichen durchsichtigen Material und auch in der gleichen Farbe, in der Regel 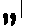 rot", hergestellt sind, wie zumindest ein Teil der Signal-Bereiche 2, 3, 4 und 5, bietet nun die Erfindung die Möglichkeit, durch die Anordnung eines Blendrahmens 11, dessen Innenkontur der Außenkontur des Leuchtenkörpers 1 mit angesetztem Rückstrahle 9 angepaßt ist, die Gesamtkontur der Rückleuchte zu variieren. Dies kann durch eine entsprechende Formgebung der Außenkontur des Blendrahmens 11 geschehen. Der Blendrahmen 11 besteht hierbei zweckmäßigerweise aus dem gleichen Material wie die Randbereiche 7 des Leuchtenkörpers 1, wobei in der Gestaltung noch die Möglichkeit besteht, die gleiche 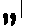 Optik" einzusetzen, so daß der Blendrahmen 11 schon aus größerer Entfernung nicht mehr als angesetztes Bauteil zu erkennen ist. Dies wird dadurch bewirkt, daß der Blendrahmen 11 in seiner der Außenkontur 10 zugekehrten Seite einen die Innenkontur des Blendrahmens 11 bildenden stegförmigen Ansatz 12 aufweist, der dicht am Leuchtenkörper 1 und an dessen durch den Rückstrahler 9 gebildeten Verlängerung anliegt. Da dieser stegförmige Vorsprung 12 dicht an den Außenkanten anliegt, sind die verbleibenden dünnen Fugen oder Nähte schon aus geringer Entfernung nicht mehr sichtbar, so daß sich für die Rückleuchte insgesamt eine einheitliche formale Gestaltung ergibt.

Hinsichtlich der Außenkontur 13 des Blendrahmens 11 ergibt sich nun die Möglichkeit, unabhängig von der Außenkontur des durch Leuchtenkörper 1 und Rückstrahler 9 gebildeten 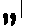 Basiselementes", das Gesamtdesign einer derartigen Rückleuchte frei zu gestalten. Dies ist in Fig. 1 beispielsweise mit der strichpunktiert gezeichneten Außenkontur 13.1 angedeutet, wobei eine derartige abgeänderte Außenkontur sich über den gesamten Bereich oder aber nur über Teilbereiche des Außenumfangs erstrecken kann.

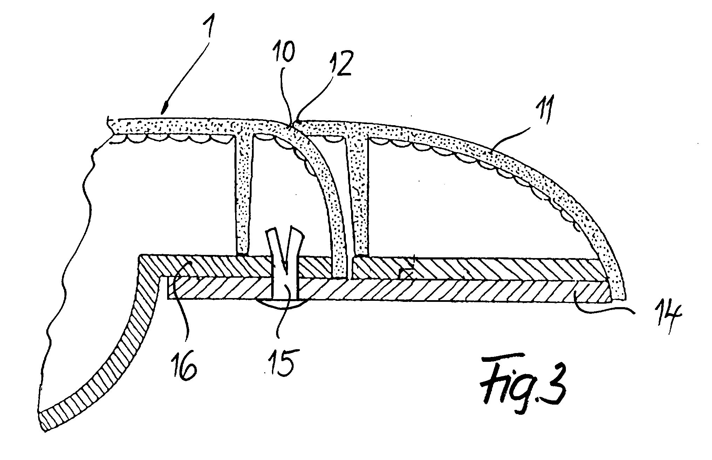

Wie die Schnittdarstellung in Fig. 3 ferner erkennen läßt, ist der Blendrahmen 11 mit einem entsprechend ausgebildeten rahmenförmigen Zusatzträger 14 versehen, der es erlaubt, über entsprechende Nieten 15 den Blendrahmen mit dem Leuchtenträger 16 zu verbinden, so daß sich insgesamt wiederum ein einheitliches Bauteil ergibt, das vom Leuchtenhersteller komplett für den Einbau beim Fahrzeughersteller angeliefert werden kann.

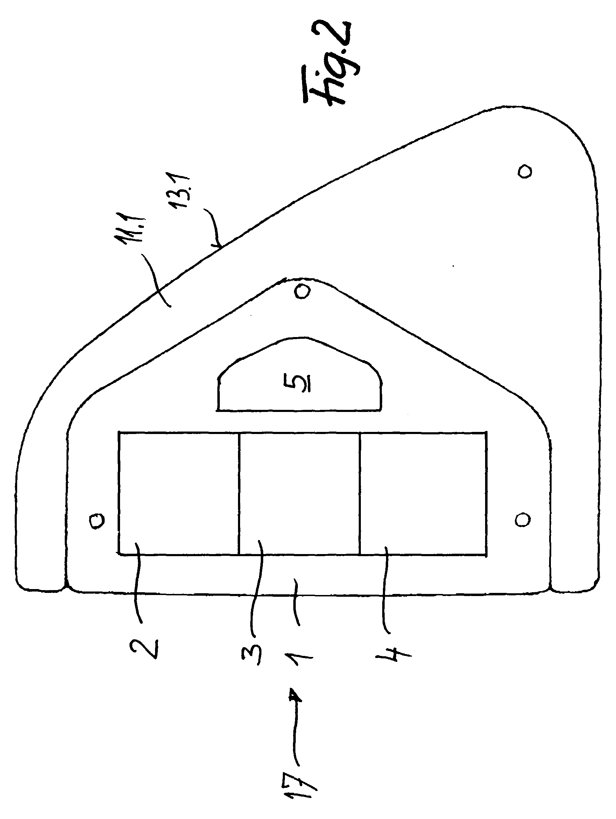

In Fig. 2 ist eine an die Form der Rückleuchte gem. Fig. 1 angepaßte Rückleuchte für ein Zugfahrzeug dargestellt. Bei der Zugfahrzeugrückleuchte ist wiederum ein Leuchtenkörper 1 gleicher Außenkontur wie der Leuchtenkörper 1 für die Anhängerrückleuchte vorgesedhen, so daß auch hier wieder die Möglichkeit besteht, mit nur einem Bauelement eine 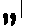 linke" und eine 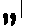 rechte" Rückleuchte zu schaffen. Zur Anpassung an die Gesamtgestaltung der Fahrzeugrückleuchte ist bei diesem Ausführungsbeispiel wiederum ein Blendrahmen 11.1 vorgesehen, der in seiner Außenkontur 13.1 der Außenkontur 13 des Blendrahmens 11 an der Anhängerrückleuchte entspricht. Dieser Blendrahmen 11.1 ist in dem Bereich, der bei der Anhängerrückleuchte durch den Dreieck-Rückstrahler ausgefüllt ist, als volle, optisch unwirksame Fläche ausgebildet. Gleichwohl ergibt sich für Zugfahrzeug und Anhänger ein gleiches Design für die Rückleuchten.

Die beiden anhand von Fig. 1 und Fig. 2 dargestellten Rückleuchten sind nun so geformt, daß die jeweils außenliegende Seite 17 abgewinkelt oder gekrümmt ausgebildet ist, so daß sie auch über eine kurze Teillänge die Seitenwandung des betreffenden Fahrzeugs überdeckt. Dementsprechend ist auch der Blendrahmen 11 bzw. der Blendrahmen 11.1 um die Fahrzeugecke herumgeführt, so daß auch der in Fahrtrichtung nach vorne weisende Bereich der Außenkane 13 des Leuchtenkörpers 1 vom Blendrahmen 11 bzw. 11.1 überdeckt ist.

Während es grundsätzlich möglich ist, den Blendrahmen einstückig herzustellen, empfiehlt es sich bei einer derart gekrümmten Rückleuchte, den Blendrahmen in wenigstens zwei Teile zu unterteilen, so daß sich zwei im wesentlichen ebene Formteile ergeben, die eine einfachere Gestaltung der erforderlichen Spritzformen ermöglichen. Die entstehende Teilungsfuge 18 des Blendrahmens 11 liegt dann im Übergangsbereich von der Fahrzeugseitenwand auf die Fahrzeugrückwand.

## Patentansprüche

1. Fahrzeugrückleuchte mit einem mehrere Signalleuchten (2, 3, 4, 5) aufweisenden Leuchtenkörper (1), der an einem Leuchtenträger (16) befestigt ist und dessen Außenkontur (10) von einem Blendrahmen (11, 11.1) umfaßt ist, der mit dem Leuchtenträger (16) verbindbar ist.

2. Fahrzeugrückleuchte nach Anspruch 1, dadurch gekennzeichnet, daß zur Befestigung des Blendrahmens (11, 11.1) ein mit dem Leuchtenträger (16) verbindbarer rahmenförmiger Zusatzträger (14) vorgesehen ist.

3. Fahrzeugrückleuchte nach einem der Ansprüche 1 oder 2, dadurch gekennzeichnet, daß der Blendrahmen (11, 11.1) aus wenigstens zwei Teilelementen zusammengesetzt ist.
